# EUROPEAN PATENT SPECIFICATION

(11) **EP 3 123 690 B1**
(45) Date of publication and mention of the grant of the patent: **13.10.2021**
(21) Application number: 15713558.3
(22) Date of filing: 18.03.2015
(51) Int. Cl.: H04L 29/06, H04L 29/12

(54) **DATA RETRIEVAL**
DATENABRUF
RÉCUPÉRATION DE DONNÉES

(30) Priority: 28.03.2014 EP 14250057
(43) Date of publication of application: 01.02.2017
(73) Proprietor: British Telecommunications public limited company, London EC1A 7AJ (GB)
(72) Inventor: SHAKIR, Robert, London EC1A 7AJ (GB); HITCHEN, Paul, London EC1A 7AJ (GB); SOPPERA, Andrea, London EC1A 7AJ (GB)
(74) Representative: British Telecommunications public limited company Intellectual Property Department
(86) International application number: PCT/GB2015/050796
(87) International publication number: WO 2015/145112

(56) References cited:
- WO-A1-01/58069
- US-A1- 2012 137 210
- US-B1- 7 103 664
- US-B2- 6 952 712
- US-B2- 7 162 539

## Description

This invention relates to data retrieval in a communications system, and has particular application to downloading video or other data in response to a request from a user.

It is common for duplicate copies of such data to be stored in different "caches" distributed over the network. This allows many users to access the data simultaneously, provides some network resilience, and reduces the number of nodes that an individual download has to negotiate to reach the terminal requiring the data. In some cases different caches may provide different versions of the data, for example to meet local geographic conditions (such as the area to be covered by a local news bulletin or weather forecast), the language of the region from which the request originates, or legal conditions such as territorially-limited distribution rights.

When a user wishes to download material, the user first connects through its internet service provider, to a content distribution server. This will typically provide a database of downloadable content, accessible by a menu or a search function. When a user selects an item of content the server delivers an address of a cache from which that content may be retrieved, and the user system then establishes a connection to that cache in order to perform the download. This system allows the addresses from which content may be retrieved to be updated dynamically as new content is added or deleted, allows additional caches to be added for content in high demand, and also allows load balancing to be achieved by arranging for the server to provide addresses of less heavily loaded caches.

In general, and subject to load balancing and other enhancements, the selection of which cache should be used to satisfy a particular request is chosen according to the network address from which the request originates. The content distribution network therefore requires a mapping database to allow the most suitable cache to be selected.

In general the request generated by the user terminal is forwarded to the content delivery network through an internet service provider's domain name server (DNS). This acts as a proxy for the user, and the required cache address is returned to this proxy address. It is this proxy address, rather than the end user's actual internet address, which is used by the content delivery platform to identify the most appropriate cache to fulfil the request. In a simple network this is unlikely to be a problem as the user has only one point of contact with the network, namely the DNS, and therefore the optimum cache for the proxy (the DNS) will also be the optimum cache for any end user connected through it.

However, in some instances an ISP (internet service provider) network may include both users and caches. The internal structure of the network may make connection between certain users and certain caches preferable to other possible connections. However, the content delivery network server will not have visibility of the internal connectivity of the ISP network, and the performance difference of paths within the network is, typically, insufficient to allow the optimal caches to be identified. This can result in an ISP cache node being used to serve a user, that results in suboptimal traffic flows.

It would be possible to divide the DNS server platform such that each serving location appears as a different recursive DNS server, allowing the CDN to differentiate each group of users and select the optimal cache node. To achieve this, each set of end users would need to use a different DNS resolver (physical or virtual) to provide the CDN with a means to distinguish them. Supporting significant numbers of different DNS servers would introduce operational complexity and costs for additional DNS infrastructure. It also puts constraints on the DNS architecture which may be suboptimal for other network functions.

United States patent 7162539 discloses a system in which users and repositories are mapped according to performance metrics, and the repository then retrieves the data from a master database for delivery to a user if it is selected. This approach assumes that all repositories are equally suitable for all services.

US 2012/0137210 A1 discloses a system for pre-fetching web content using a proxy server.

According to the invention there is provided a route mapping process for identifying the suitability of data sources for satisfying data requests generated by user terminals. The invention is set out in the appended claim set.

The tagging allows user addresses and data source addresses to be associated according to data other than network topography. This allows factors other than network topography, such as language or other preferences, to be used to select the appropriate content distribution server for satisfying a given request. It also allows aspects of network topography that are not apparent to the distribution server to be taken into account. Such aspects may occur for example because both the user address and the data source addresses are part of a subnetwork whose structure is not apparent to the content distribution server, which is therefore unable to identify the data source address closest to the user address.

One or more content distribution servers may use the register generated by the mapping process. The register may be accessible to the content distributions servers, or individual servers may maintain respective registers updated by the mapping server.

Preferably the data source addresses are stored with an associated precedence value

Preferably the selection and precedence are made on the basis of network proximity.

The invention also provides for a content distribution server, on receiving a data request, to identify the address of the user and retrieves from the register the data source address appropriate to that address to be communicated to the user.

The invention is of particular application as part of a process in which the data request is transmitted from a user terminal to a proxy server and from the proxy server to the content distribution server, wherein the proxy server generates an origin message identifying the address of the user terminal, and wherein the content distribution server identifies the address of the user from the origin message and uses that address to retrieve the appropriate data source address, and returns a message to the proxy server, identifying the data source address, for the proxy server to forward the message to the user.

The invention further provides a processor for operating the route mapping process specified above, and a content distribution system comprising such a route mapping processor configured to respond to a data request received from a user by identifying an address from which the data request is received and to retrieve from the route mapping processor's register a data source address appropriate to that address to be communicated to the user. The invention is particularly applicable to an arrangement in which the content distribution server is configured to receive a data request from a user terminal by way of a proxy server, the data request including an origin message generated by the proxy server and identifying the address of the user terminal, that the content distribution server being configured to identify an address of the user from the origin message and to use that address to retrieve the appropriate data source address, and to return a message to the proxy server, identifying the data source address, for forwarding to the user.

The Content distribution server learns tagged routing information delivered from the network, and performs a particular longest-match mapping function to generate a list of preferred service node locations for each end user. The community information is extracted from Border Gateway Protocols and used to derive the respective network location, which can then be then mapped to preferred service nodes.

The 'optimum' service node is defined based on the hierarchy of the network — particularly it is the nearest node that falls along the "normal" traffic flow route through the infrastructure. The view that is provided is wholly related to the network connectivity - rather than service-layer information such as the demand per service node.

In the preferred embodiment the mapping server element is implemented by re-using components of existing router devices, and adding the mapping algorithm's logic.

The initial applicability of this function is for mapping of content distribution network cache locations to the relevant set of end users within the Broadband network. However, it can additionally be used for other services - such as providing the best location to provide termination of other overlay services where IP access is used (e.g., voice service nodes, WiFi gateways, Mobile EPC).

An embodiment of the invention will be further described by way of example with reference to the accompanying drawings, in which:
Figure 1 depicts an existing end-user mapping approach
Figure 2 depicts how end users are mapped to infrastructure in an ISP network with Domain Name Servers;
Figure 3 is similar to Figure 1, but depicting a more granular client identification approach;
Figure 4 depicts a layered network;
Figure 5 depicts a process according to the invention in which network proximity is translated to cache preference.
Figure 6 is an illustration of how cache lists may be developed as caches are distributed at deeper levels in the network structure
Figure 7 depicts a content distribution system serving multiple networks and user sets;
Figure 8 depicts a process for selecting the appropriate addressing for a multi-application system of the kind depicted in Figure 7;

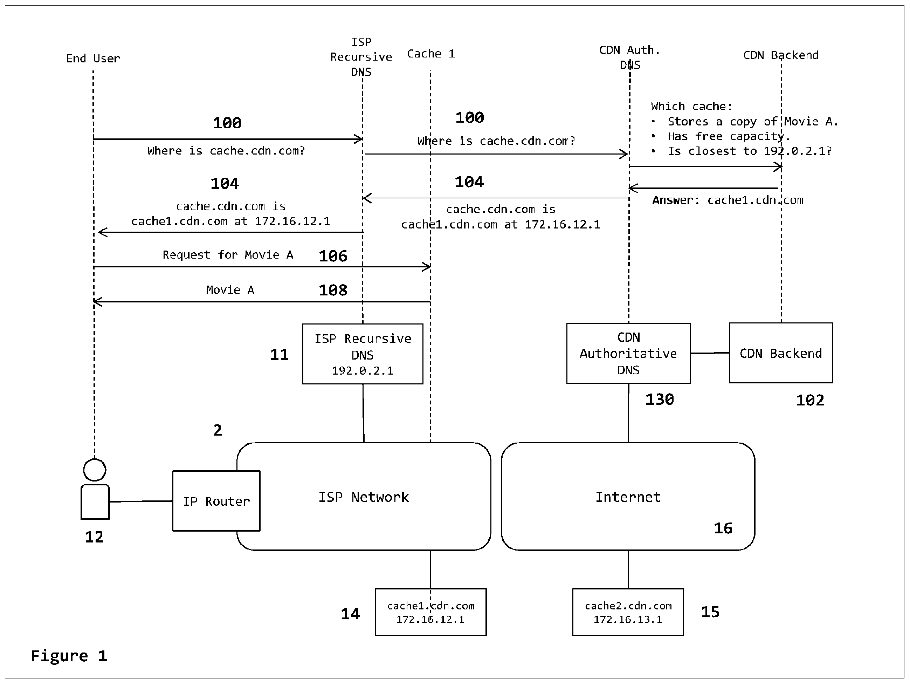

As shown in Figure 1 a typical prior art content distribution network (CDN) server 130 makes mapping decisions based on the address of the Domain Name Server (DNS) 11 from which it receives a request. (The internet addresses used in the Figures are illustrative)

The process requires the user 12 to transmit a request 100 to the internet service provider's server 11 (ISP Recursive DNS), which forwards the request 100 to the CDN's server (CDN Authoritative DNS) 130. Each instance of the request 100 includes header information indicating its source, so that the response can be directed to the appropriate node in the network.

The CDN server 130 then identifies the optimum cache 14, 15 to deliver traffic to the end user. The criteria used to determine this (step 102) are based on the object availability, the CDN's cache capacity, and a mapping 13 of how the CDN reaches the ISP's network infrastructure. This mapping identifies the cache 14 closest to the source of the request 100 as identified by the header information in that request. (In Figure 1 this is the cache cluster A (referenced 14) because this is directly connected to the ISP network 11 through which the request was received, whilst cluster B (referenced 15) can only be reached through another network 16.

However, it should be noted that when the request 100 is forwarded to the CDN 130 by the ISP recursive DNS 11, the address header data used by the CDN server 130 relates to the ISP 11 and not the original source 12 of the request.

The CDN 130 generates a response 104 identifying the address of the optimum cache 14 and transmits the response to the server 11 from which it received the request 100. The ISP recursive DNS 11, in its turn, forwards the response 104 to the user 12 from which it received the original request. The user terminal 12 then generates a download request 106 to the cache 14 identified in the response 104 (which is again routed by way of the ISP 2). The cache 14 returns the requested video stream data 108 to the ISP 2 from which it received the request 106, and the ISP 2 in turn forwards the video stream data to the user 12.

It will be noted that this system relies on the ISP recursive DNS 11 being a suitable proxy for the user 12. This will be the case provided that any CDN 14, 15 to which the user 12 has access can only be reached through the ISP recursive DNS 11, and that there is no internal structure to the ISP network 2.

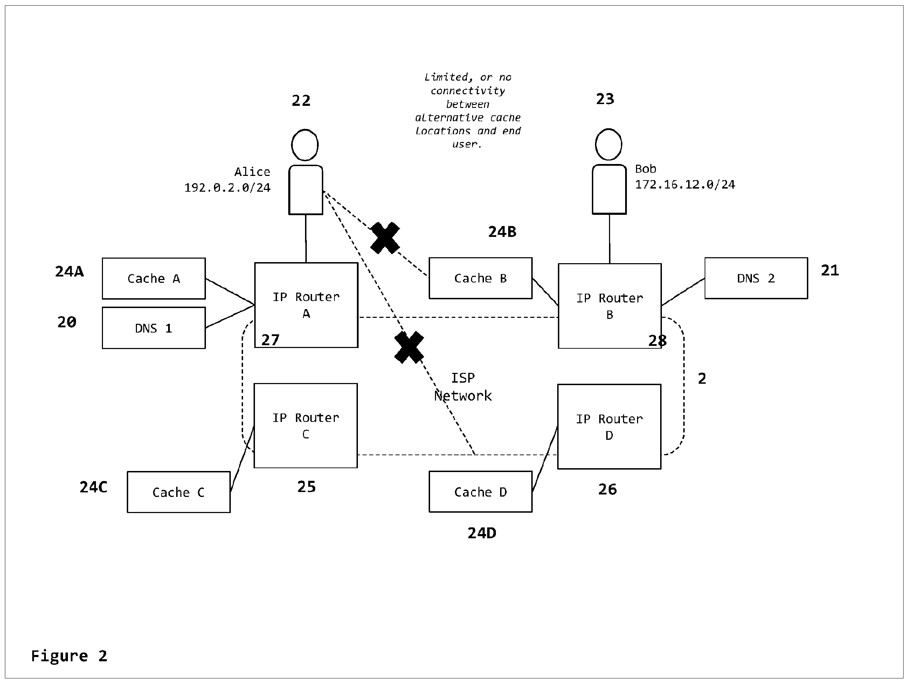

However, in a more complex system such as that shown in Figure 2, this may not be the case. Figure 2 depicts an ISP network 2 having an internal structure comprising a plurality of cores 25, 26 (typically more than the two depicted). Each core is associated with one or more IP routers (27, 28 respectively) serving a number of users (22, 23 respectively) and caches (24A, 24B respectively) and having its own domain name server (20, 21 respectively). Figure 2 also depicts further caches 24C, 24D associated respectively with cores 25, 26 but with different IP routers (not shown)

This internal structure results in different caches 24A, 24B, 24C, 24D being optimum for different users 22, 23 despite being served from the same ISP 2. Since the CDN 13 has no view of the internal connectivity of the ISP network 2, and the performance difference of paths within the network is typically insufficient to allow the optimal caches to be selected, then this results in any of the ISP cache nodes 24A, 24B, 24C, 24D being used to serve any user 22, 23, causing suboptimal traffic flows. For example user "Alice" 22 has a direct connection to the cache 24A connected to the same IP router, less direct connection to the cache 24C (via the core 25 serving the user 22 and the cache 24C), and limited or no connectivity to caches 24B, 24D associated with a different core 26.

One prior art solution has been to divide the DNS server platform such that each serving location appears as a different recursive DNS server 20, 21. This allows the CDN to differentiate each group of users and select the optimal cache node. However, in order to be mapped differently each set of end users must utilise different DNS resolvers (physical or virtual) to provide the CDN with a means to distinguish them. This is operationally complex, and as more clusters of caches exist, more options exist to ensure that the optimal route in the network is taken. Taking the relatively simple example in Figure 2, user "Alice" 22 should normally be served from Cache 24A and fall back to Cache 24C, whereas user "Bob" should normally be served from Cache 24B and fall back to Cache 24D. This requires the CDN 13 to be able to identify the individual router 27, 28, which requires they appear as separate DNS resolvers. 20, 21. Supporting significant numbers of different DNS servers 20, 21 introduces operational complexity, and may introduce costs for additional DNS infrastructure.

To avoid having to continually sub-divide the DNS platform, it is desirable to provide mapping based on the IP address of the end user 12, 22, 23, rather than the IP address of the DNS server 11, 20, 21 through which the request 100 is routed.

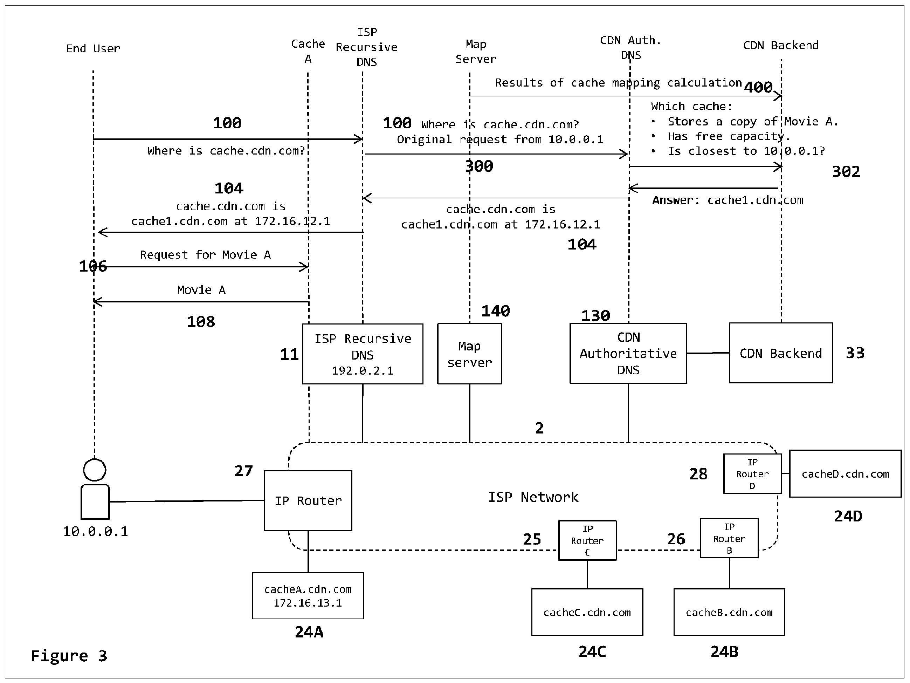

As shown in Figure 3, the ISP recursive DNS 11 is arranged to add a simple field 300 to the request 100 transmitted from the service provider to the content delivery server 130. This field 300 generally identifies the router 27 from which the request came, rather than the exact address of the user 12. The content distribution server 130 requires a modified process 33 in which this user field 300 is used, instead of the apparent source 2 of the request, to perform a lookup against the actual end user, rather than the DNS server 2, in order to select the cache 24A from which the data is to be delivered.

In order to derive the mapping function 302, it is necessary for the content delivery network's domain name server 130 to have a mapping of end users to data caches. This is not as easy to achieve as it is when the relationships between users and caches are at a low level, as the CDN does not have direct access to their addressing to a deep enough level. Considering Figure 2, all the caches 24A, 24B, 24C, 24D, are connected through the same ISP network, and are thus seen as all being equally accessible to both users 22, 23. The fine structure of the ISP network 2 is not visible to the CDN. As will be described, we therefore introduce in this invention the notion of a Map Server 140 that will process ISP structure information and pass this information to the CDN backend 33 through a message 400.

In the example of Figure 2, an order of precedence for the user 23 would be, in descending order, Cache B - Cache D - Cache C. Cache A should not be used in this example. However, for the user 22 the order should be Cache A - Cache C - Cache D: cache B should not be used. Such rules are required in order to ensure deterministic capacity planning of cache and core network capacity, and to meet constraints such that traffic does not begin to flow via under-dimensioned paths - e.g., trying to serve many users from an edge network location.

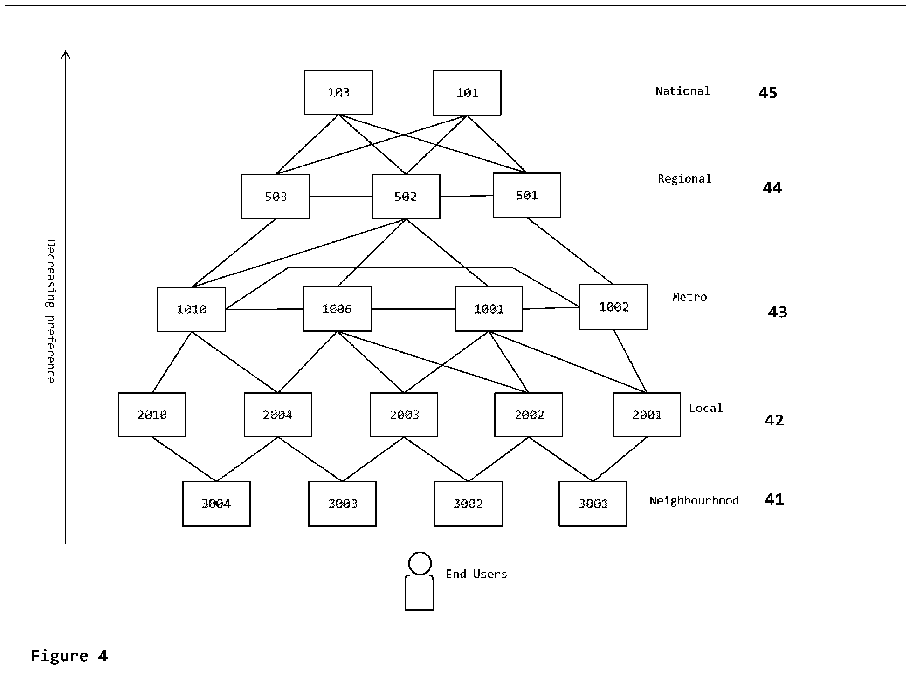

Figure 4 shows a number of tiers 41, 42, 43, 44, 45 of a network. Between "Local" locations (e.g 2001) and Metro locations (e.g 1001) there is only limited connectivity, with long geographical distances between these locations. It is therefore necessary for traffic to be driven from a connected node at another (higher) level. At the metro level 43, there is a higher level of meshing, but each metro location (e.g 1001) is only parented to certain regional nodes (501, 502), so it is most efficient to ensure "local" nodes are used.

Caches towards the national distribution levels 44, 45 each serve a large number of ISPs. The ideal is to ensure that traffic continues to follow "normal" routes, and fall back to the next "hop" in the network if load-balancing is required or in the event of a network failure such that the most effective cache is used.

As shown on the right hand side of Figure 4, individual nodes 501, 502 are shown at the Regional level 44, nodes 1001, 1002, 1010 at the metro level 43, nodes 2001, 2002, 2010 at the Local level 42 and the end user node 3001 at the neighbourhood tier level 41. The end user 3001 in the neighbourhood level 41 is tagged with markers for nodes 3001, 2002, 2001, 1002, 1001, and 101 which are all sites that are connected in the normal traffic flow. It is not tagged with 2010, as nodes 3001 and 2010 are not connected except through a deeper level 43.

Caches that are located at a particular node advertise a special "cache identifier" and similar information about how they are connected deeper into the network. So a Cache at the Regional tier would advertise itself as a cache in site 1001, and advertise its connections as "1001,101". This information allows the determination of where end users are connected, and how the site they are connected to is parented within the network, and where caches are installed in the network. Through combining this information, it can be determined which is the most efficient way to serve end users, wherever caches are placed within the network.

According to an embodiment of the invention such a mapping is generated by announcing to each cache which users it is allowed to serve, and setting a preference tag on each address pool (route) to determine what the cache's preference is for that particular set of end-users. In order to signal these preferences, it is necessary to determine which users should be served by each cache, and then map the cost to serve an end user from the cache to the preference attribute, as shown for example in Table 1 below.

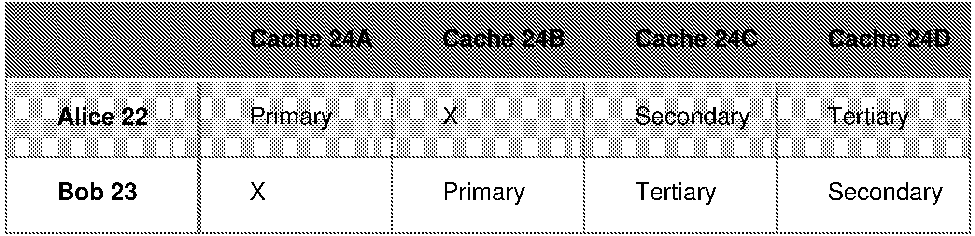

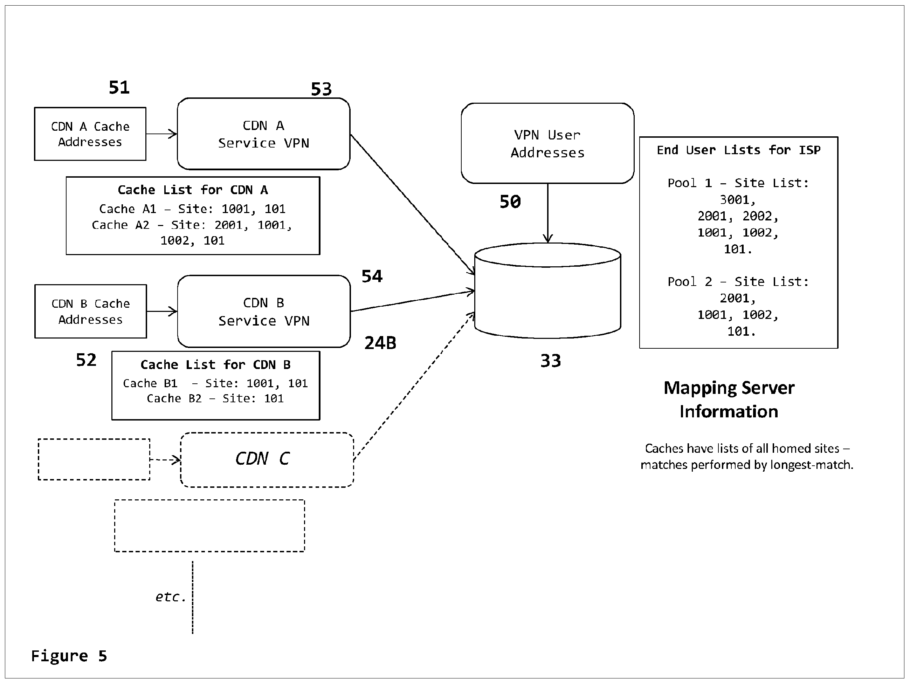

Figure 5 depicts a process according to the invention in which Network Proximity is translated to Cache Preference. As described above each cache 24A, 24B etc. is tagged with an ordered list 51, 52 of sites to which it is connected, in order of proximity. Figure 5 shows two separate content distribution networks 53, 54, as typically a user may require access to more than one network.

The mapping server 33 is arranged to receive cache addresses and their associated tag lists. To translate the Network Proximity information to a set of mappings that can be provided to the CDN, the mapping server imports the different CDNs that are installed in the network, and determines their cache addresses through the "Cache" identifier and the site at which they are located. It also imports the end-user routes from the CP's VPN instance 50. These routings are each tagged with their 'Pool' identifier and the site at which they are located. The mapping server can then determine the closest cache to each set of end users by determining the highest common site list identifier (longest match) between the end user's address, and the cache site lists. So, for example, for an end user in Pool 1, searching for a cache in the content distribution network 53, it will work through its site list 3001, 2001, 2002 etc until it finds a match in the cache list. In this case there is no match for the first site 3001, but there is a match for the second site 2001 (cache A2), and this is marked as the highest preference. There is no match for the third site 2002, but the fourth site 1001 is matched at cache A1 so this is marked as the second preference. This information can then be propagated to the CDN provider to allow the identity of the cache to be used to be transmitted to the user.

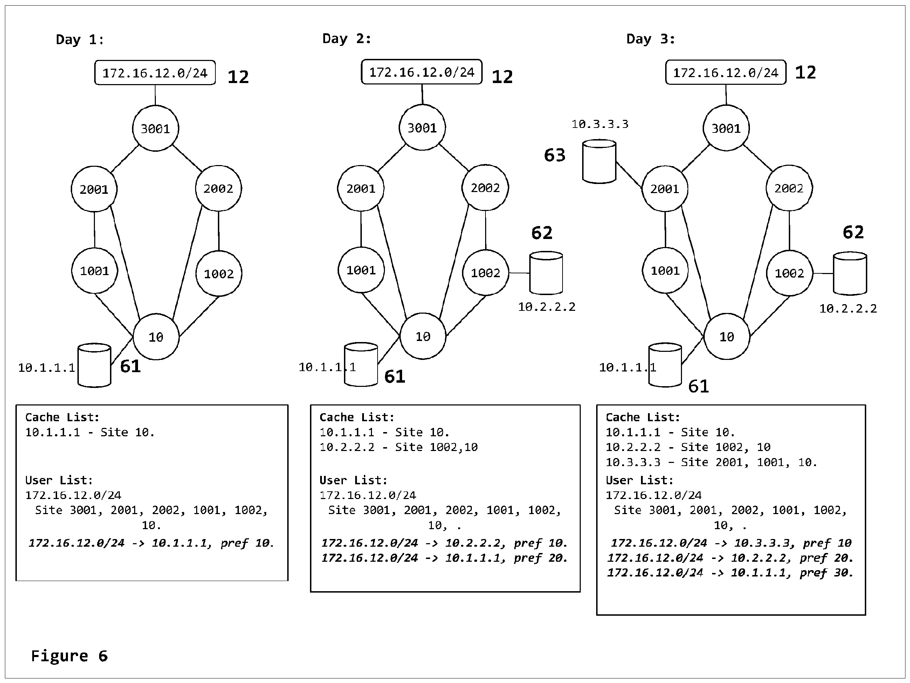

Figure 6 is an illustration of how cache lists may be developed as additional caches are added to the system closer to the user. As caches are added the mapping server modifies the user preferences accordingly. In Figures 6a, 6b and 6c the connectivity list associated with the user 12 is as indicated, with the sites listed in order of maximum hop depth (nodes of equal hop depth, e.g. 2001, 2002, are sorted arbitrarily). The cache list is organised similarly. In Figure 6a there is only one cache 61, which is attached directly to the deepest-level node 10. The mapping server therefore identifies the closest match to the user as being through this node 10.

In Figure 6b a second cache 62 has been added at a node 1002, at the next deepest level. This therefore has a cache list of sites 1002, 10 (its point of attachment and all the nodes - just one in this case) deeper in the network. The mapping server, when next scans the system, will add this new cache 62, and its cache list, to the database. When the user 12 next requests a content delivery, the mapping goes through the user list as before but now finds a match at node 1002 (which is earlier in the list than node 10) and links to that. Similarly in Figure 6C a further CDN 63 has been added at node 2001, which is even closer to the user 12 and therefore this is now the first match to be identified.

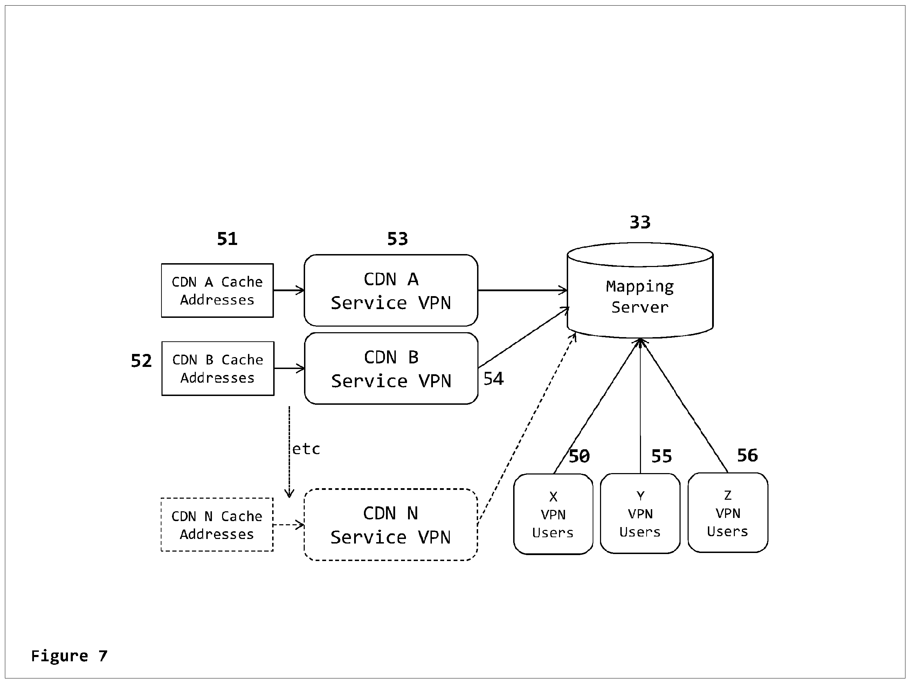

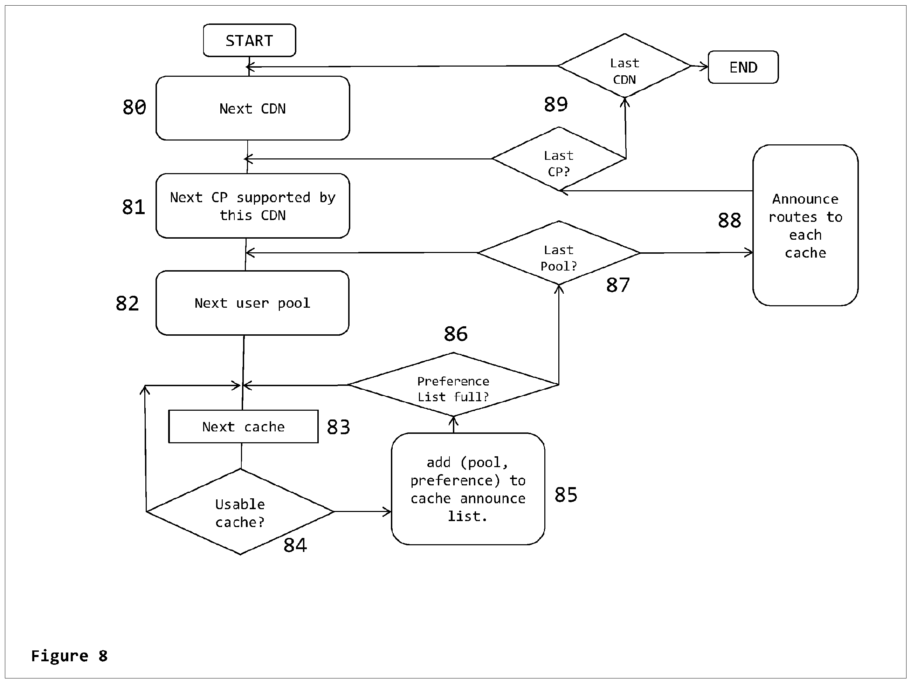

Figure 7 and Figure 8 illustrate an extension of the principle to cover multiple virtual private networks 50, 55, 56. The situation is illustrated in Figure 7 and the process in Figure 8. This process has to take into account which Content distribution networks are applicable to which Content providers - e.g., CDN A (53) can serve VPN Y (55) but not VPN Z (56). As shown in Figure 8, multiple selection processes must be run to determine which information should be announced to which cache provider.

The process operates as follows:
For each Content Distribution network (53, 54 etc.) in turn (step 80), and each content provider served by that network (step 81) a list is compiled to identify the routes to each user for each of the Service and Content Provider VPNs in turn (step 81). This can be done by extracting routes from the VPNv4 Routing Information Base (RIB) by route-target. This is achieved by retrieving in turn all border gateway protocol (BGP) communities tagged on a specific RIB entry (step 82), and examining each user 22, 23 in that community in turn (step 83). In practice, a number or "pool" of users may be attached to the same IP router, and one search may be conducted in respect of that pool instead of each individual user.

Referring to Figure 2, starting with the "most specific" (deepest) community 27 to the first user pool 22, the process determines if there are any caches in the same community (e.g cache 24A) step 83. This can be done using functionality in an existing router implementing virtual route forwarding (VRF) code, a routing information base (RIB) interface, and border gateway protocol (BGP).

The process then determines if the cache is usable for the service in question (step 84) and, if it is, it adds it to a list associated with the cache identified (e.g. cache 24A) (step 85), allocating it the highest available preference (step 85). That is to say, the first, most local, cache found is given the highest preference, and further, more remote, caches 24C, 24D are allocated successively lower preferences in the order they are discovered (steps 83, 84, 85) until a predetermined number of caches are identified (step 86). Consequently, for each cache a list is set up identifying one or more user pools to which the cache is capable of delivering data, together with an indication of its position in order of preference for that pool.

The process is then repeated for other user pools (step 87), e.g. user 23. This will add further terms to the cache lists, according to the preferences determined when measured from the second pool 23, exemplified in Table 1 above.

Once all the pools have been considered (step 87), the completed route lists are loaded onto the content delivery network 33 (step 88). The process may then be repeated for other content providers and content delivery networks (step 89).

## Claims

1. A route mapping process for identifying the suitability of data sources for satisfying data requests generated by user terminals, wherein the process:
searches one or more user address databases (41-44) for user addresses (22, 23),
searches one or more data distribution network databases (51, 52) for addresses of data sources (24A-24D),
for each user address selects one or more data source address suitable for delivering data to that user address,
generates a register (33) of the selected data source addresses, the register having tag data associating user addresses with data sources
the register being accessible by a content distribution server (53, 54) to identify data source addresses suitable for accession of data by the content distribution server for delivery to a user address in response to a data request received from the user address,
**characterized in that** the register (33) comprises a plurality of lists (61) associated with different services, and the selection and precedence of a data source address for each list are made on the basis of network proximity for the respective service, and wherein:
the data request is transmitted from the user address (22) to a proxy server (20);
the proxy server generates an origin message identifying the user address (22);
the proxy server transmits the data request and the origin message to a content distribution server (53);
the content distribution server identifies the user address from the origin message, and uses the user address to retrieve, from the register (33), a suitable data source address to be communicated to the user;
the content distribution server returns a message to the proxy server, identifying the suitable data source address;
the proxy server forwards the message identifying the suitable data source address to the user.

2. A route mapping process according to Claim 1, wherein the data source addresses are stored with an associated precedence value.

3. A content distribution system comprising:
route mapping processor (33) for identifying the suitability of data sources for satisfying data requests generated by user terminals, comprising a register (61) of data source addresses, the register having tag data associating user addresses with data source addresses, and
a content distribution server (53) configured to access the register and identify data source addresses suitable for accession of data by the content distribution server for delivery to a user address in response to a data request received from the user address,
the route mapping processor being configured to search one or more user address databases (41-44) for user addresses, and to search one or more data distribution network databases (51-52) for addresses of data sources, and to select, for each user address, one or more data source addresses for which tag data associated with the user address is stored in the register,
**characterized in that** the register comprises a plurality of lists (61) associated with different services, the precedence of data source addresses being made on the basis of network proximity for the respective service, wherein the content distribution server maintains a register generated by the mapping processor, and wherein the system further comprises a proxy server (20), and wherein:
the proxy server is configured to receive the data request from the user address,
the proxy server is configured to generate an origin message identifying the user address,
the content distribution server is configured to receive the data request and the origin message from the proxy server (20),
the content distribution server is configured to identify the user address from the origin message and to use the user address to retrieve, from the register, a suitable data source address to be communicated to the user, and to return a message to the proxy server, identifying the suitable data source address,
the proxy server is configured to forward the message identifying the suitable data source address to the user.

4. A route mapping processor according to Claim 3, wherein the data source addresses are stored with an associated precedence value.

## Patentansprüche

1. Verfahren zum Mappen von Routen zum Identifizieren der Eignung von Datenquellen zum Erfüllen von durch Benutzerendgeräte erzeugten Datenanforderungen, wobei das Verfahren:
eine oder mehrere Benutzeradressdatenbanken (41-44) nach Benutzeradressen (22, 23) durchsucht,
eine oder mehrere Datenverteilungsnetzdatenbanken (51, 52) nach Adressen von Datenquellen (24A-24D) durchsucht, für jede Benutzeradresse eine oder mehrere Datenquellenadressen auswählt, die für das Liefern von Daten an diese Benutzeradresse geeignet sind,
ein Register (33) der ausgewählten Datenquellenadressen erzeugt, wobei das Register Markierungsdaten enthält, die die Benutzeradressen den Datenquellen zuordnen wobei auf das Register von einem Inhaltsverteilungsserver (53, 54) zugegriffen werden kann, um Datenquellenadressen zu identifizieren, die für den Zugriff auf Daten durch den Inhaltsverteilungsserver zur Lieferung an eine Benutzeradresse als Reaktion auf eine von der Benutzeradresse empfangene Datenanforderung geeignet sind,
**dadurch gekennzeichnet, dass** das Register (33) mehrere Listen (61) umfasst, die verschiedenen Diensten zugeordnet sind, und die Auswahl und der Vorrang einer Datenquellenadresse für jede Liste auf der Grundlage der Netznähe für den jeweiligen Dienst erfolgt, und wobei:
die Datenanforderung von der Benutzeradresse (22) an einen Proxyserver (20) übertragen wird;
der Proxyserver eine Ursprungsmeldung erzeugt, die die Benutzeradresse identifiziert (22);
der Proxyserver die Datenanforderungen und die Ursprungsnachricht an einen Inhaltsverteilungsserver (53) überträgt;
der Inhaltsverteilungsserver die Benutzeradresse aus der Ursprungsnachricht identifiziert und unter Verwendung der Benutzeradresse aus dem Register (33) eine geeignete Datenquellenadresse abruft, die an den Benutzer kommuniziert werden soll;
der Inhaltsverteilungsserver sendet eine Nachricht an den Proxyserver zurück gibt, die die geeignete Datenquellenadresse identifiziert;
der Proxyserver die Meldung, die die geeignete Datenquellenadresse identifiziert, an den Benutzer weiterleitet.

2. Verfahren zum Mappen von Routen nach Anspruch 1, wobei die Datenquellenadressen mit einem zugeordneten Vorrangwert gespeichert werden.

3. Inhaltsverteilungssystem, umfassend:
Einen Prozessor (33) zum Mappen von Routen zum Identifizieren der Eignung von Datenquellen für die Erfüllung von durch Benutzerendgeräte erzeugten Datenanforderungen, umfassend ein Register (61) von Datenquellenadressen, wobei das Register Markierungsdaten aufweist, die Benutzeradressen mit Datenquellenadressen verbinden, und
einen Inhaltsverteilungsserver (53), der dazu ausgelegt ist, auf das Register zuzugreifen und Datenquellenadressen zu identifizieren, die für den Zugriff auf Daten durch den Inhaltsverteilungsserver zur Lieferung an eine Benutzeradresse als Reaktion auf eine von der Benutzeradresse empfangene Datenanforderung geeignet sind,
der Prozessor zum Mappen von Routen dazu ausgelegt ist, eine oder mehrere Benutzeradressdatenbanken (41-44) nach Benutzeradressen zu durchsuchen und eine oder mehrere Datenverteilungsnetzdatenbanken (51-52) nach Adressen von Datenquellen zu durchsuchen und für jede Benutzeradresse eine oder mehrere Datenquellenadressen auszuwählen, für die der Benutzeradresse zugeordnete Markierungsdaten in dem Register gespeichert sind,
**dadurch gekennzeichnet, dass** das Register mehrere Listen (61) umfasst, die verschiedenen Diensten zugeordnet sind, wobei der Vorrang der Datenquellenadressen auf der Grundlage der Netznähe für den jeweiligen Dienst erfolgt, wobei der Inhaltsverteilungsserver ein Register führt, das von dem Mapping-Prozessor erzeugt wird, und wobei das System ferner einen Proxyserver (20) umfasst, und wobei:
der Proxyserver dazu ausgelegt ist, die Datenanforderung von der Benutzeradresse zu empfangen,
der Proxyserver dazu ausgelegt ist, eine Ursprungsmeldung zu erzeugen, die die Benutzeradresse identifiziert,
der Inhaltsverteilungsserver dazu ausgelegt ist, die Datenanforderung und die Ursprungsmeldung von dem Proxyserver (20) zu empfangen,
der Inhaltsverteilungsserver dazu ausgelegt ist, die Benutzeradresse aus der Ursprungsmeldung zu identifizieren und die Benutzeradresse zu verwenden, um aus dem Register eine geeignete Datenquellenadresse abzurufen, die an den Benutzer kommuniziert werden soll, und um eine Meldung an den Proxyserver zurückzusenden, die die geeignete Datenquellenadresse identifiziert,
der Proxyserver dazu ausgelegt ist, die Meldung, die die geeignete Datenquellenadresse identifiziert, an den Benutzer weiterzuleiten.

4. Prozessor zum Mappen von Routen nach Anspruch 3, wobei die Datenquellenadressen mit einem zugeordneten Vorrangwert gespeichert werden.

## Revendications

1. Processus de mappage de route pour identifier l'adéquation de sources de données à satisfaire des demandes de données générées par des terminaux d'utilisateurs, dans lequel le processus :
recherche des adresses d'utilisateurs (22, 23) dans une ou plusieurs bases de données d'adresses d'utilisateurs (41-44) ,
recherche des adresses de sources de données (24A-24D) dans une ou plusieurs bases de données de réseau de distribution de données (51, 52),
sélectionne pour chaque adresse d'utilisateur une ou plusieurs adresses de sources de données appropriées pour délivrer des données à cette adresse d'utilisateur,
génère un registre (33) des adresses de sources de données sélectionnées, le registre comportant des données de balise associant des adresses d'utilisateurs à des sources de données
le registre étant accessible par un serveur de distribution de contenu (53, 54) pour identifier des adresses de sources de données appropriées pour l'accès à des données par le serveur de distribution de contenu en vue de leur délivrance à une adresse d'utilisateur en réponse à une demande de données reçue à partir de l'adresse d'utilisateur,
**caractérisé en ce que** le registre (33) comprend une pluralité de listes (61) associées à différents services, et la sélection et la précédence d'une adresse de source de données pour chaque liste sont réalisées en fonction d'une proximité de réseau pour le service respectif, et dans lequel :
la demande de données est transmise à partir de l'adresse d'utilisateur (22) à un serveur mandataire (20) ;
le serveur mandataire génère un message d'origine qui identifie l'adresse d'utilisateur (22) ;
le serveur mandataire transmet la demande de données et le message d'origine à un serveur de distribution de contenu (53) ;
le serveur de distribution de contenu identifie l'adresse d'utilisateur à partir du message d'origine et utilise l'adresse d'utilisateur pour récupérer, à partir du registre (33), une adresse de source de données appropriée à communiquer à l'utilisateur ;
le serveur de distribution de contenu renvoie au serveur mandataire un message identifiant l'adresse de source de données appropriée ;
le serveur mandataire transfère le message identifiant l'adresse de source de données appropriée à l'utilisateur.

2. Processus de mappage de route selon la revendication 1, dans lequel les adresses de sources de données sont mémorisées avec une valeur de précédence associée.

3. Système de distribution de contenu comprenant :
un processeur de mappage de route (33) pour identifier l'adéquation de sources de données à satisfaire des demandes de données générées par des terminaux d'utilisateurs, comprenant un registre (61) d'adresses de sources de données, le registre comportant des données de balises associant des adresses d'utilisateurs à des adresses de sources de données, et
un serveur de distribution de contenu (53) configuré pour accéder au registre et identifier des adresses de sources de données appropriées pour un accès à des données par le serveur de distribution de contenu en vue de leur délivrance à une adresse utilisateur en réponse à une demande de données reçue à partir de l'adresse utilisateur,
le processeur de mappage de route étant configuré pour rechercher des adresses d'utilisateurs dans une ou plusieurs bases de données d'adresses d'utilisateurs (41-44), rechercher des adresses de sources de données dans une ou plusieurs bases de données de réseau de distribution de données (51-52) et sélectionner, pour chaque adresse d'utilisateur, une ou plusieurs adresses de sources de données pour lesquelles des données de balises associées à l'adresse d'utilisateur sont stockées dans le registre,
**caractérisé en ce que** le registre comprend une pluralité de listes (61) associées à différents services, la précédence des adresses de source de données étant réalisée en fonction d'une proximité de réseau pour le service respectif, dans lequel le serveur de distribution de contenu tient à jour un registre généré par le processeur de mappage, et dans lequel le système comprend en outre un serveur mandataire (20), et dans lequel :
le serveur mandataire est configuré pour recevoir la demande de données à partir de l'adresse d'utilisateur,
le serveur mandataire est configuré pour générer un message d'origine qui identifie l'adresse de l'utilisateur,
le serveur de distribution de contenu est configuré pour recevoir la demande de données et le message d'origine à partir du serveur mandataire (20),
le serveur de distribution de contenu est configuré pour identifier l'adresse d'utilisateur à partir du message d'origine et utiliser l'adresse d'utilisateur pour récupérer, à partir du registre, une adresse de source de données appropriée à communiquer à l'utilisateur et renvoyer au serveur mandataire un message identifiant l'adresse de source de données appropriée,
le serveur mandataire est configuré pour transférer le message identifiant l'adresse de source de données appropriée à l'utilisateur.

4. Processeur de mappage de route selon la revendication 3, dans lequel les adresses de sources de données sont mémorisées avec une valeur de précédence associée.
